# NOUVEAU FASCICULE DE BREVET EUROPEEN

(11) **EP 1 378 385 B2**
(45) Date de publication et mention de la décision concernant l'opposition: **19.03.2014**
(45) Mention de la délivrance du brevet: 21.04.2010
(21) Numéro de dépôt: 03370022.0
(22) Date de dépôt: 13.06.2003
(51) Int. Cl.: B60J 7/06, F16D 1/10

(54) **Embout pour dispositif d'enroulement d'un élément enroulable tel que bâche ou similaire, notamment d'un véhicule**
Endstück für die Aufrollvorrichtung von Wickelgut wie Planen oder Ähnlichem, speziell für Kraftfahrzeuge
Tip for a roll-up device for winding material such as tarpaulins, specially for vehicles

(30) Priorité: 01.07.2002 FR 0208198
(43) Date de publication de la demande: 07.01.2004
(73) Titulaire: THIRIET S.A.S., 08000 Warcq (FR)
(72) Inventeur: Thiriet, Philippe, 08420 Warcq (FR)
(74) Mandataire: Boubal, Denis Henri Jacques

(56) Documents cités:
- EP-A- 0 985 910
- WO-A1-00/47908
- DE-A1- 1 575 932
- DE-A1- 3 334 416
- DE-A1- 3 623 762
- DE-A1- 3 838 232
- DE-A1- 19 732 663
- DE-C- 129 774
- DE-C2- 3 802 326
- DE-U1- 7 736 811
- DE-U1- 20 107 788
- DE-U1- 29 812 776
- DE-U1- 29 917 849
- FR-A- 1 477 239
- US-A- 1 550 701
- US-A- 2 028 492
- US-A- 2 332 293
- US-A- 4 294 302
- US-A- 5 682 938
- US-A- 5 882 062

## Description

La présente invention concerne un embout pour dispositif d'enroulement d'un élément enroulable tel que bâche ou similaire, notamment d'un véhicule.

Elle vise plus particulièrement, dans le domaine du transport, à équiper des caisses de camions ou remorques, utilisées pour le transport de marchandises munies de bâches de protection.

Dans ce type de caisse ou remorque, il est utile de disposer de bâches amovibles pouvant être enlevées et placées rapidement notamment pour faciliter le chargement et/ou le déchargement des marchandises.

On connaît à cet effet différents dispositifs dont un utilisant un dispositif d'enroulement comportant un arbre de transmission, un embout pour dispositif d'enroulement et un arbre d'enroulement dudit élément enroulable.

Dans ce type de dispositif, c'est l'embout qui assure la liaison entre l'axe de transmission du dispositif d'enroulement et l'arbre d'enroulement, il est généralement formé d'un seul bloc et comporte à ses deux extrémités des moyens d'assemblage avec respectivement l'axe de transmission et l'arbre d'enroulement.

Plus précisément, dans les dispositifs connus, les moyens d'assemblage entre l'embout et l'arbre d'enroulement sont constitués par un ou plusieurs plots assujettis à la surface de l'embout et venant s'emmancher à force dans un creux ménagé sur toute la longueur dudit arbre d'enroulement.

Cet embout permettant la liaison présente différents inconvénients parmi lesquels la nécessité d'avoir un creux dans ledit arbre d'enroulement ce qui diminue la rigidité de ce dernier. De plus, compte tenu des contraintes fortes exercées lors de la rotation dudit embout, et également du fait que ces contraintes s'exercent essentiellement sur les extrémités du plot et sur les bords du creux dont le profil est en forme de croissant, ces dispositifs présentent des problèmes de déformation et de rupture empêchant un enroulement et/ou déroulement dudit élément enroulable.

On connaît du document FR 1.477.239 un accouplement démontable destiné à assurer une liaison entre deux arbres coaxiaux de profil en arcs de cycloïde.

Ce document ne solutionne pas le problème de la liaison entre l'axe de transmission d'un dispositif, d'enroulement de l'élément enroulable et l'arbre d'enroulement.

L'accouplement démontable présente, pour chaque arbre, une partie creuse, dont la paroi intérieure est complémentaire de la paroi extérieure de profil en arcs de cycloïde de l'extrémité de l'arbre de transmission.

La présente invention a pour but de pallier aux inconvénients précités et permettre une répartition homogène de la force exercée par l'embout sur ledit arbre d'enroulement.

Un autre but de la présente invention est de proposer un embout pour dispositif d'enroulement d'un élément enroulable tel que bâche ou similaire qui permette un assemblage rapide entre ces deux éléments.

Un autre but de la présente invention est de proposer un embout pour dispositif d'enroulement d'un élément enroulable tel que bâche ou similaire qui permette de diminuer ou de supprimer le creux existant à l'intérieur dudit arbre d'enroulement.

D'autres buts et avantages de la présente invention apparaîtront au cours de la description qui va suivre qui n'est donnée qu'à titre indicatif et qui n'a pas pour but de la limiter.

L'invention concerne un embout pour dispositif d'enroulement tel que défini à la revendication 1.

L'invention vise également un dispositif d'enroulement/déroulement d'un élément enroulable tel qu'une bâche ou similaire d'un véhicule équipé d'un embout tel que précité.

Elle sera mieux comprise à la lecture de la description suivante, accompagnée des dessins en annexe qui en font partie intégrante et parmi lesquels :
- la figure 1 illustre, selon une vue en perspective, un premier exemple de réalisation d'un embout conforme à l'invention associé à un arbre d'enroulement adapté audit embout,
- la figure 2 illustre, selon une coupe radiale un exemple de réalisation conforme à l'invention.

La présente invention est relative à un embout pour dispositif d'enroulement d'un élément enroulable tel que bâche ou similaire, notamment d'un véhicule. Il s'agit d'un embout destiné à assurer la liaison entre l'axe de transmission 4 du dispositif d'enroulement, et l'arbre d'enroulement 2 dudit élément enroulable.

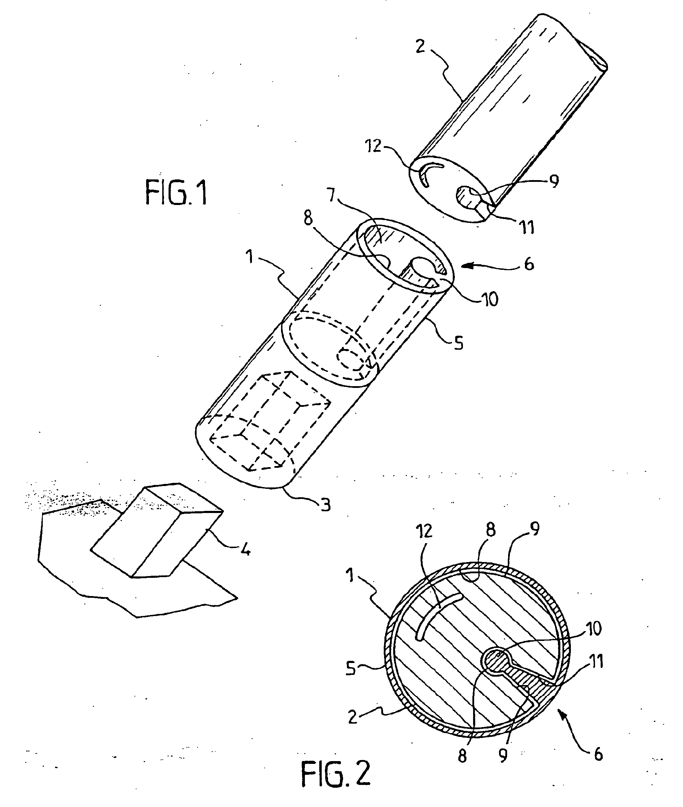

En se reportant plus particulièrement à la figure 1, on voit que l'embout 1 comprend une première extrémité 3. Cette extrémité est destinée à coopérer avec l'extrémité de l'arbre de transmission 4.

Dans l'exemple de réalisation des figures 1 et 2, ladite première extrémité 3 comporte un creux dont la section de profil est rectangulaire de manière à coopérer selon un assemblage de type mâle/femelle avec l'extrémité de l'axe de transmission 4 présentant une section rectangulaire.

Cela étant, dans d'autres modes de réalisation, on pourra envisager tout autre type d'assemblage connu de l'homme du métier.

Ledit embout 1 comporte également une seconde extrémité 5 comprenant des moyens de liaison 6 pour enchâsser l'extrémité dudit arbre d'enroulement 2 de manière à transmettre le mouvement de rotation dudit axe de transmission 4 audit arbre d'enroulement 2.

Lesdits moyens de liaison 6 sont constitués d'une partie creuse 7 dont la paroi intérieure 8 est complémentaire de la paroi extérieure 9 de l'extrémité dudit arbre d'enroulement 2.

On voit à la figure 2, représentant une vue de coupe au niveau de l'enchâssement entre l'arbre d'enroulement 2 et dudit embout 1, que ladite paroi intérieure 8 est en vue de profil circulaire et comporte une protubérance 10 correspondant à la partie 11 de la paroi extérieure 9 destinée à agripper l'élément enroulable avec l'arbre d'enroulement 2.

Ladite protubérance 10 permet d'assurer l'entraînement en rotation dudit arbre d'enroulement 2.

Ainsi constitués, lesdits moyens de liaison 6 permettent d'exercer une force en rotation sur l'ensemble de la partie 11 tout en empêchant la déformation de cette partie 11 qui est enchâssée dans la partie creuse 7 par la paroi intérieure 8.

On pourra notamment prévoir que les dimensions de la paroi intérieure 8 de la seconde extrémité 5 de l'embout 1 soit identique ou très légèrement supérieure à la paroi extérieure 9 dudit arbre d'enroulement 2 de manière à supprimer toute vibration entre ledit embout 1 et ledit arbre d'enroulement 2 lors de l'entraînement en rotation. L'assemblage des deux éléments est alors réalisé par emmanchement à force et notamment à l'aide d'un outil de type marteau.

De manière à éviter un éventuel écrasement ou une déformation de la protubérance 10, on prévoit que cette protubérance 10 est pleine.

De plus, de manière encore une fois à augmenter la résistance de ladite protubérance 10, on prévoit que cette dernière est ménagée sur toute la hauteur de ladite partie creuse 7.

En se reportant à la figure 2, on voit que ladite protubérance 10 présente un profil en forme de trou de serrure.

Autrement dit, ladite protubérance 10 comporte en vue de profil une partie circulaire et une partie en forme de trapèze dont la grande base est assujettie à la partie circulaire de ladite paroi intérieure 8.

Cette forme est complémentaire de la partie 11 qui elle-même est adaptée pour recevoir ladite barre d'accrochage qui est généralement de forme circulaire.

L'embout 1 sera réalisé dans tout matériau compatible avec le matériau utilisé pour réaliser l'arbre d'enroulement 2 et avantageusement de même nature que ce dernier.

Il faut également signaler que ledit arbre d'enroulement 2 peut comporter une découpe interne 12. Toutefois, cette découpe interne 12 n'est plus, contrairement aux dispositifs connus, nécessaire pour permettre l'entraînement de l'arbre d'enroulement 2 ou son assemblage sur ledit embout 1. Ainsi, ladite découpe interne 12 pourra être choisie en fonction d'un simple compromis entre le poids et la rigidité dudit arbre d'enroulement 2.

L'invention vise également un dispositif d'enroulement/déroulement d'un élément déroulable tel que bâche ou similaire, notamment d'un véhicule, comprenant un mécanisme d'entraînement avec un axe de transmission 4, un arbre d'enroulement 2 et un embout 1 tel que précité.

Naturellement, d'autres modes de réalisation, à la portée de l'homme de l'art, auraient pu être envisagés sans pour autant sortir du cadre de la présente invention telle que définie par les revendications ci-après.

## Revendications

1. Embout pour dispositif d'enroulement d'un élément enroulable sous forme d'une bâche de véhicule, ledit embout étant destiné à équiper des caisses de remorques ou de camion pour assurer la liaison entre l'axe de transmission (4) dudit dispositif d'enroulement et l'arbre d'enroulement (2), ledit arbre d'enroulement (4) comportant une partie d'accrochage (11) sur la paroi extérieure (9) destinée à agripper l'élément enroulable, ledit embout (1) comprenant une première extrémité (3), coopérant avec l'extrémité de l'axe de transmission (4), et une seconde extrémité (5), coopérant avec l'extrémité dudit arbre d'enroulement (2, ladite seconde extrémité (5) comportant une protubérance (10) coopérant avec la partie d'accrochage (11) de la paroi extérieure (9) de l'extrémité de l'arbre d'enroulement (2) **caractérisé en ce que** ladite seconde extrémité (5) comprend des moyens de liaison (6), constitués d'une partie creuse (7), dont la paroi intérieure (8), de profil circulaire, est complémentaire de la paroi extérieure (9) de l'extrémité dudit arbre d'enroulement, pour enchâsser l'extrémité dudit arbre d'enroulement (2), de manière à transmettre le mouvement de rotation dudit axe de transmission (4) audit arbre d'enroulement (2), la paroi intérieure (8) comportant ladite protubérance (10) correspondant à la partie d'accrochage (11) de la paroi extérieure (9) de l'extrémité dudit arbre d'enroulement (2), destinée à agripper l'élément enroulable, ladite protubérance (10) permettant d'assurer l'entraînement en rotation dudit arbre d'enroulement (2), ladite protubérance étant pleine, solidaire de ladite paroi intérieure, ménagée sur toute la hauteur de ladite partie creuse (7), ladite protubérance présentant un profil en trou de serrure, complémentaire à ladite partie d'accrochage (11) sur la paroi extérieure (9) de l'arbre d'enroulement (2), ladite protubérance comportant en vue de profil une partie circulaire et une partie en forme de trapèze dont la grande base est assujettie la partie circulaire de ladite paroi intérieure (8).

2. Embout selon la revendication 1, dans lequel l'embout (1) est réalisé dans un matériau compatible avec le matériau utilisé pour réaliser ledit arbre d'enroulement (2).

3. Dispositif d'enroulement/déroulement d'un élément enroulable, sous forme d'une bâche, de véhicule destiné à équiper des caisses de remorques ou de camion, comprenant un mécanisme d'entraînement, un arbre de transmission (4), un arbre d'enroulement (2) et un embout (1) selon l'une quelconque des revendications 1 à 2.

## Patentansprüche

1. Anschlussstück fiir eine Vorrichtung zum Aufwickeln eines aufwickelbaren Elements, wie eine Fahrzeugplane, wobei das Anschlussstück zum Bestücken von Anhänger- oder LKW-Aufbauten bestimmt ist, um die Übertragungswelle (4) der Aufwickelvorrichtung und die Aufwickelwelle (2) miteinander zu verbinden, wobei die Aufwickelwelle (2) ein Kupplungsteil (11) an der Außenwand (9) enthält, das dazu bestimmt ist, das aufwickelbare Element zu ergreifen, und das Anschlussstück (1) ein erstes Ende (3), das mit dem Ende der Übertragungswelle (4) zusammenwirkt, und ein zweites Ende (5), das mit dem Ende der Aufwickelwelle (2) zusammenwirkt, umfasst, und das zweite Ende (5) einen Vorsprung (10) umfasst, der mit dem Kupplungsteil (11) der Außenwand (9) des Endes der Aufwickelwelle (2) zusammenwirkt, **dadurch gekennzeichnet, dass** das zweite Ende (5) Verbindungsmittel (6) umfasst, die aus einem hohlen Abschnitt (7) bestehen, dessen Innenwand (8) mit kreisförmigem Profil komplementär zur Außenwand (9) des Endes der Aufwickelwelle ist, um das Ende der Aufwickelwelle (2) so zu fassen, dass die Drehbewegung der Übertragungswelle (4) auf die Aufwickelwelle (2) übertragen wird, wobei die Innenwand (8), die den Vorsprung (10) umfasst, der dem Kupplungsteil (11) der Außenwand (9) des Endes der Aufwickelwelle (2) entspricht, dazu bestimmt ist, das aufwickelbare Element zu ergreifen, wobei der Vorsprung (10) es erlaubt, die Aufwickelwelle (2) zum Drehen zu bringen, und der Vorsprung aus Vollmaterial, fest mit der Innenwand (8) verbunden, und über die ganze Höhe des hohlen Abschnitts (7) vorgesehen ist, und der Vorsprung ein zum Kupplungsteil (11) an der Außenwand (9) der Aufwickelwelle (2) komplementäres, schlüssellochförmiges Profil aufweist, und der Vorsprung in Profilansicht einen kreisförmigen Abschnitt und einen trapezförmigen Abschnitt umfasst, dessen Grundseite am kreisförmigen Abschnitt der Innenwand (8) befestigt ist.

2. Anschlussstück nach Anspruch 1, bei dem das Anschlussstück (1) aus einem Material hergestellt ist, das mit demjenigen Material verträglich ist, das zur Herstellung der Aufwickelwelle (2) verwendet wird.

3. Vorrichtung zum Auf-/Abwickeln eines aufwickelbaren Elements wie einer Fahrzeugplane, zum Bestücken von Anhänger- oder LKW-Aufbauten, umfassend einen Antriebsmechanismus, eine Übertragungswelle (4), eine Aufwickelwelle (2) und ein Anschlussstück (1) nach irgendeinem der Ansprüche 1 bis 2.

## Claims

1. Insert for winding device of a windable element in the form of a vehicle tarpaulin, said insert intended to be provided on bodies of trailers or of lorries in order to provide the link between the transmission axle (4) of said winding device and the winding shaft (2), said winding shaft (2) comprising a hooking section (11) on the outer wall (9) intended for gripping the windable element, said insert (1) comprising a first end (3), co-operating with the end of the transmission axle (4), and a second end (5), co-operating with the end of said winding shaft (2), said second end (5) comprising a protrusion (10) co-operating with the hooking section (11) of the outer wall (9) of the end of the winding shaft (2) **characterised in that** said second end (5) comprises linking means (6), formed of a hollow section (7), whereof the inner wall (8), of circular profile, is complementary to the outer wall (9) of the end of said winding shaft, for fitting into the end of said winding shaft (2), so as to transmit the rotational rotation from said transmission axle (4) to said winding shaft (2), the inner wall (8) comprising said protrusion (10) corresponding to the hooking section (11) of the outer wall (9) of the end of said winding shaft (2), intended for gripping the windable element, said protrusion (10) enabling rotational drive of said winding shaft (2), said protrusion being full, integral with the inner wall, provided over the whole height of the hollow section (7), said protrusion exhibiting a keyhole-shaped profile, complementary with said hooking section (11) on the outer wall (9) of the winding shaft (2), said protrusion comprising as a profile view a circular portion and a trapeze-shaped portion of which the base is secured to the circular portion of said inner wall (8).

2. Insert according to claim 1 wherein the insert (1) is made of a material compatible with the material used for making said winding shaft (2).

3. Winding/unwinding device of a windable element, in the form of a vehicle tarpaulin intended to be provided on bodies of trailers or of lorries, comprising a drive mechanism, a transmission shaft (4), a winding shaft (2) and an insert (1) according to any of the claims 1 to 2.
